Europäisches Patentamt

European Patent Office

Office européen des brevets

(19)

(11) Publication number: **0 088 549**

**B1**

(12) **EUROPEAN PATENT SPECIFICATION**

(45) Date of publication of patent specification: **17.12.86**

(51) Int. Cl.⁴: **G 01 N 1/06**

(21) Application number: **83300881.6**

(22) Date of filing: **21.02.83**

(54) Sectioning apparatus, section supporting device and method.

(30) Priority: **04.03.82 US 354837**

(43) Date of publication of application:
**14.09.83 Bulletin 83/37**

(45) Publication of the grant of the patent:
**17.12.86 Bulletin 86/51**

(84) Designated Contracting States:
**BE DE FR GB IT NL**

(56) References cited:
**DE-A-2 412 315**
**GB-A-1 240 548**
**US-A-3 690 988**
**US-A-3 924 500**

(73) Proprietor: **TECHNICON INSTRUMENTS CORPORATION**
**511 Benedict Avenue**
**Tarrytown, New York 10591 (US)**

(72) Inventor: **Gordon, Abraham**
**512 Warwick Avenue**
**Teaneck New Jersey 07666 (US)**

(74) Representative: **Wain, Christopher Paul et al**
**A.A. THORNTON & CO. Northumberland House**
**303-306 High Holborn**
**London WC1V 7LE (GB)**

Courier Press, Leamington Spa, England.

## Description

The present invention is concerned generally with the sectioning of specimens, such as biological specimens, and in particular with a device for supporting a section and with apparatus for preparing a section.

To prepare a section of a biological specimen, such as a histological tissue specimen, for mounting upon a microscope slide, typically after fixation, dehydration and infiltration with melted paraffin, the specimen is embedded in a block of paraffin. Typically, sections are then cut from the embedded specimen by mounting the block of paraffin in the vice of a microtome, and relatively moving a cutting blade through the block, following small incremental advances of the block perpendicular to the cutting motion. The sections are then mounted upon a microscope slide(s) and stained. Apparatus and procedures for mounting tissues upon microscope slides are generally described in U.S. patent no. 2,996,762.

The use of adhesive tapes to hold biological specimen sections during sectioning is disclosed, for example, by Vannevar Bush, *Science*, 115:649—652 (1952). As in the reference by Bush, pressing a ribbon of cellulose tape against a section surface of paraffin block or frozen section of tissue sample to support a section cut from the block, is also disclosed by Palmgren, *Nature*, 174:40 (1954) (see also, Beckel, *Nature*, 184:1584 (1959) and Gowers et al, *Nature*, 190:424 (1961)).

U.S. Patent No. 3,690,988, discloses a microtome for sectioning biological specimens which comprises a knife and specimen holder movable relative to each other in a cutting stroke. A ribbon of tape having an adhesive surface is provided for collecting sequential sections from the specimen block. The tape extends from a supply roll to a collecting roll which holds the tape parallel to the direction of the cutting stroke (cutting plane). An advance mechanism moves the specimen holder in a direction perpendicular to the cutting plane to provide the thickness of the next section of the sample block to be cut. The tape is pressed against the sample block after each advance, but prior to the subsequent cutting stroke. During the cutting stroke, the tape is pressed against the exposed surface of the specimen block. The section cut from the specimen block adheres to the tape during the cutting of the section. The tape is advanced by a length substantially equal to the length of the cutting stroke between successive cutting operations. It is disclosed that the section being cut is backed and supported by the tape, so it will not be deformed or distorted (compressed) by the knife during the cutting process. This also is discussed in Collewijn et al, *Stain Technology*, 44:55 (1969).

We have found that inaccuracies and fouling of the microtome are both problems which plague apparatus such as described in the prior art. The clearances, or tolerances, required by the mechanical parts of the advance mechanism are shifted in one direction by activation of that mechanism and displaced, to the extent of the clearance, in the opposite direction by the pressure used in contacting the adhesive tape with the sample block. This pressure also changes the thickness of any lubricant film coating the mechanical parts. The thickness of the section then cut is thus made inaccurate by these deficiencies. The adhesive surface of the tape has also been observed to intermittently contact and adhere to the side surfaces, or cutting facets, of the microtome blade, thus fouling the apparatus with resulting shut-down of operation.

In accordance with the present invention, there is provided a device for supporting a slice (or section) cut from a sample block, and also an apparatus and method for sectioning a sample block using such a device, whereby the problems encountered in the prior art are reduced or overcome. The sectioning apparatus is particularly advantageous in the automated processing of tissue sections for clinical analysis. The supporting device can be in the form of a single-use disposable device suitable for use with conventional apparatus, such as commercially available microtomes.

In one aspect, the invention provides a device for supporting a slice cut from a sample block which device comprises a spacer defining an aperture of a dimension sufficient to admit said slice; and a platen having a surface of which at least a portion is adhesive, at least part of said adhesive portion being exposed through said aperture for adherence to said slice, said platen being of a material having an elasticity sufficient to permit resilient extension of an adhesive portion of the surface through said aperture.

The aperture defined in the spacer has a transverse dimension defined by a side wall, which is preferably greater than the thickness of the section of sample which is to be cut. In one preferred embodiment, the spacer is a protective layer in the form of a film, such as a polymeric film, having an aperture cut or otherwise formed therein. The transverse dimension of the side wall is thus defined by the thickness of the particular film used. In a preferred embodiment, the platen comprises a polymeric film layer having an adhesive surface. In this embodiment, the film layer is preferably polyester and the adhesive is preferably pressure-sensitive adhesive. The device may further include a release backing for covering (before use) at least the adhesive exposed by the aperture of the flexible protective layer.

The device can take other forms particularly adapted for use in automated instruments. One such form is an elongated sheet of material having repeating segments, each of which comprises the structure as described above. For example, the elongated sheet of material can have a protective layer which comprises a film roll having uniform perforations along the length thereof and a platen which comprises a layer of polymeric film which has a pressure-sensitive adhesive on at least one side. The platen can further include means for positioning, such as sprocket holes.

In another aspect, the invention provides a sectioning apparatus for using a device of the invention or an elongate unit of such devices, which apparatus comprises:

(a) a blade for cutting a slice from a sample block;

(b) means for positioning said sample block relative to said blade;

(c) means for positioning the adhesive portion of the platen surface of a said device relative to the sample block;

(d) means for relatively moving the adhesive portion of said platen surface of said device and the sample block into mutual contact;

(e) means for relatively moving the sample block and the blade to cut a slice of the sample block which is adhered to the adhesive portion of the platen surface;

(f) the spacer means for the device spacing from the blade that portion of the platen adhering to the sample slice cut from said sample block during relative movement of the sample block and blade.

A pressure roller mechanism can be used for moving the adhesive portion of the platen surface and the sample block into mutual contact. The pressure roller mechanism can comprise: (a) a pressure roller; (b) a lever arm having opposed ends, one end being associated with the pressure roller; and (c) drive means, associated with the other end of the lever arm, for moving the pressure roller. In another embodiment, the pressure roller mechanism can comprise: (a) pressure roller; (b) a racetrack cam, about which the pressure roller moves; and (c) drive means for moving the pressure roller.

In a further aspect, the invention provides a method of sectioning a slice from the surface of a sample block, using a blade and a device of the invention; which method comprises: (1) adhering a portion of a platen of a said device to a surface of the sample block; (2) relatively moving the sample block and the blade to cut a slice from the sample block, with the spacer of the device lying between the non-adhered portion of the platen and the blade to lift that portion of the slice which has been cut from the sample block during relative movement of the sample block and blade.

In order that the invention may be more fully understood, preferred embodiments thereof will now be described, by way of example only, with reference to the accompanying drawings, wherein:

FIGURE 1 is an isometric view of a preferred embodiment of a sectioning apparatus of the invention;

FIGURE 2 is a partial isometric view of a preferred embodiment of a sectioning apparatus of the invention, with emphasis on a preferred embodiment of the section-supporting device of the invention;

FIGURE 2a is a diagrammatic illustration of a section which is partially cut from a sample block and carried away by the section-supporting device of the invention;

FIGURE 3 is a cross-sectional view of the apparatus and device illustrated in Figure 2, taken along line 3—3; and

FIGURES 4a—d are sequential diagrammatic views illustrating a cycle of operation of a preferred embodiment of the sectioning apparatus of the invention.

Although specific terms are used in the following description for clarity, they refer only to the particular embodiment(s) selected for illustration, and are not intended to limit the scope of the invention.

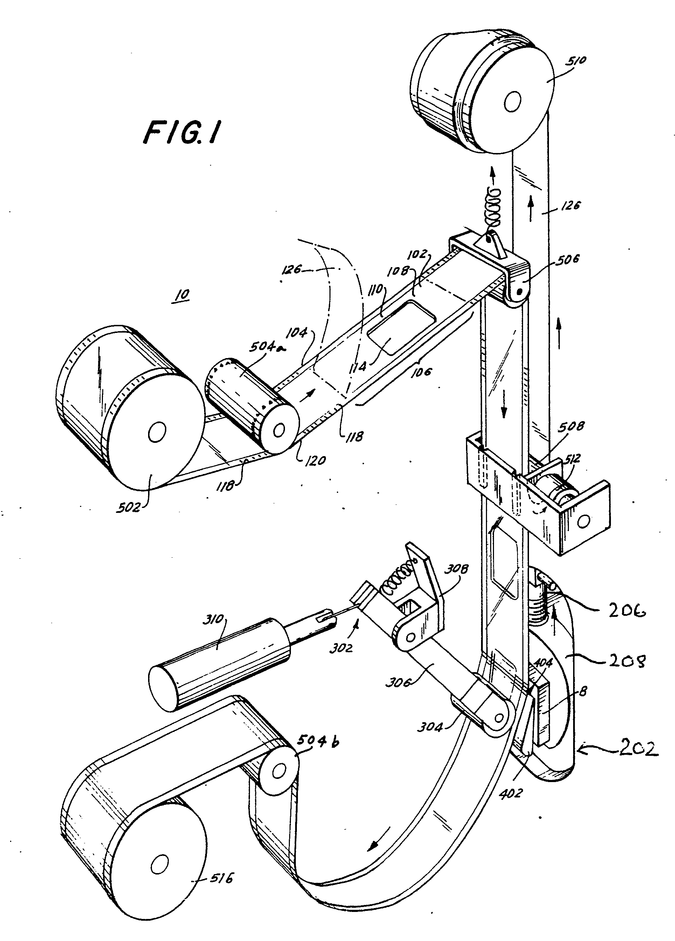

Referring now to Fig. 1, the section transfer apparatus, generally designated as 10, comprises a section-supporting device 102, a sample block mechanism 202, a pressure roller mechanism 302, a blade 402 and a series of spools and rollers arranged to feed and accept an elongated sheet 104 of section-supporting device 102 covered by a release backing 126.

Elongated sheet 104 is conveyed through section transfer apparatus 10 from supply spool 502 by identical drive sprockets 504a and 504b (1:1 gear ratio) which register with sprocket holes 118 along the side edges 120 of elongated sheet 104. Release backing 126 is stripped from elongated sheet 104 at stripping roller 508. The stripped backing is then fed to release backing take-up spool 510. Elongated sheet 104 is comprised of repeating segments 106, each of which is adapted to receive and support a section S of a sample from a sample block B. Repeating segments 106, each supporting a section S (i.e. a slice) of the sample, pass in a slack loop onto elongated sheet take-up spool 516.

Sample block mechanism 202 holds sample block B in respect to the cutting plane defined by cutting edge 404 to the portion of elongated sheet 104 between tension roller 506 and cutting edge 404. The sample block B is held in chuck 208 by screw clamp 206. An advance mechanism (not illustrated) moves sample block B along a path perpendicular to the cutting plane of the apparatus. The extent to which the sample block B is advanced defines the thickness of the section S of sample to be cut.

Pressure roller mechanism 302 moves against elongated sheet 104 opposing sample block B, thereby pressing adhesive surface 124 into contact with the portion of sample block B exposed above cutting edge 404. In the embodiment illustrated pressure roller mechanism 302 comprises: (a) a pressure roller 304; (b) a lever arm 306 having opposed ends, one end being associated with the pressure roller, e.g., rotatably mounted; and (c) drive means, such as solenoid 310, associated with the other end of lever arm 306. Solenoid 310 is responsive to a conventional operator activated drive means which is not illustrated. Frame mount 308 serves as a fulcrum for the action of lever arm 306 in moving roller 304 into contact with and away from elongated sheet 104. In another embodiment (not illustrated) the pressure roller mechanism comprises a roller which moves about the track of a racetrack cam. A racetrack cam is a closed loop track about which a cam, such as a roller, moves. During movement along one straightaway portion of the racetrack cam, the roller is in contact with and applies pressure to that portion of the elongated sheet which is in contact with the sample block.

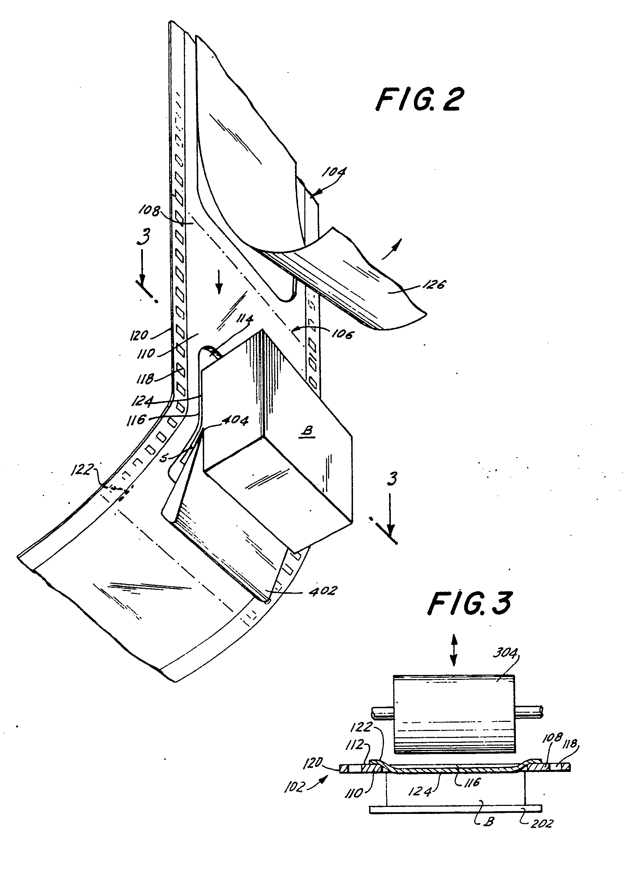

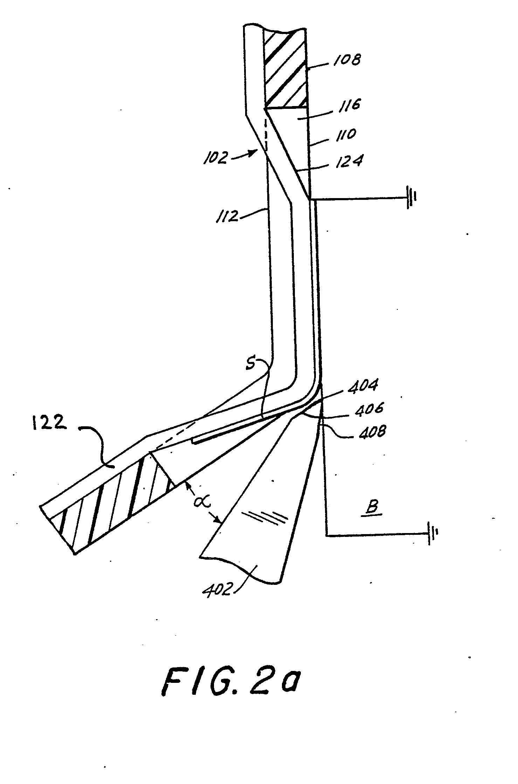

Referring now to Fig. 2, section-supporting device 102 is shown in the form of an elongated sheet 104, with repeating segments 106 denoted by phantom lines. Elongated sheet 104 is illustrated in characteristic relationship to sample block B and blade 402 when used in a section transfer apparatus such as that of Fig. 1.

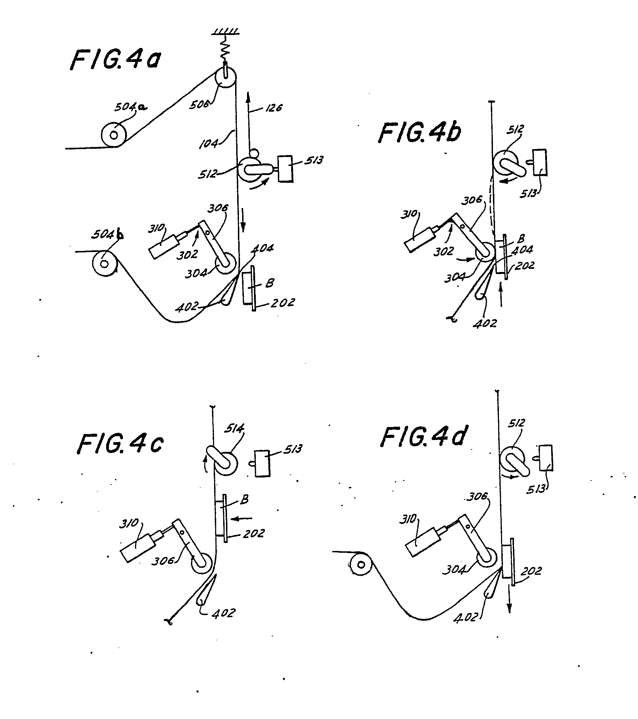

As shown, each repeating segment 106 comprises: (a) a flexible protective layer 108, having an external surface 110, an internal surface 112 (see Fig. 3) and an aperture 114 therethrough, and (b) a platen 122 having a surface 124, of which at least a portion is adhesive, associated with internal surface 112 such that at least a portion of the adhesive is exposed through aperture 114. Aperture 114 is defined by aperture wall(s) 116 and is of dimensions sufficient to admit a section S of the sample. Platen 122 is of a material having elasticity sufficient to permit resilient extension of adhesive surface 124 beyond external surface 110 of flexible protective layer 108.

Platen 122 is illustrated to be a 0.0005 inch (0.013 mm) thick Mylar™ polyester film coated with a 0.0005 inch (0.013 mm) thick layer of pressure-sensitive adhesive. The adhesive-coated film is available from 3M Company, St. Paul, MN. Mylar™ is a trademark of E. I. du Pont de Nemours, Wilmington, DE. Other thin films having low stiffness, including flexible metals, can be used as can a wide variety of pressure-sensitive adhesives. In the embodiment illustrated, flexible protective layer 108 has a 0.004 inch (0.1 mm) thick Mylar polyester film. Other flexible films having a thickness of from about 0.001 (0.025 mm) to about 0.008 inch (0.203 mm) are also suitable. In another embodiment, not illustrated, the protective layer can be of a reusable rigid material, such as inflexible sheet metal and is not bound to the platen.

Referring now to Fig. 2a, adhesive surface 124 of section-supporting device 102 is in contact with section S which has been partially cut from sample block B. Blade 402 is positioned adjacent to sample block B such that cutting edge 404 of blade 402 has cut a portion of transverse section S from sample block B. The resiliency of platen 122 of section-supporting device 102 withdraws section S as the cut is made. The portion of section S which has been cut is drawn away from blade 402 and into aperture 114, which is bordered by side wall(s) 116. The section S of sample is spaced from blade 402 by protective layer 108, which is thicker than the transverse dimension of section S. Subsequent to cutting, platen 122 resumes its original position such that adhesive surface 124, supporting section S, is parallel to internal surface 112 of flexible protective layer 108.

Blade 402 has an upper cutting facet 406 and lower cutting facet 408 which converge at cutting edge 404. External surface 110 of flexible protective layer 108 rides on a portion of upper cutting facet 406, then moves or lifts off, deflecting that portion of section-supporting device 102 which has received a portion of section S into aperture 116. The angle α which is created between the side of blade 402 and external surface 110 is maximized. This angle is predetermined by defining the amount of slack, and thus the shape of the slack loop, between blade 402 and drive sprocket 504b (not shown). This acts in conjunction with the resiliency of platen 122 to further protect section S and ensure uninterrupted operation of the sectioning apparatus. In this way the risk of contact between adhesive surface 124 and blade 402 is overcome.

Fig. 3 is a cross-section of Fig. 2 taken along line 3—3 and illustrates the elasticity of platen 122. The directional arrows depict the plane of movement of pressure roller 304 for contact of adhesive surface 124 with sample block B and subsequent withdrawal of roller 304. When in contact with and prior to cutting section S from the sample block B, platen 122 is extended through aperture 114 to contact sample block B. As shown, adhesive surface 124 remains in contact with sample block B even after roller 304 has withdrawn to its original position. The transverse dimension between internal surface 112 and external surface 110 is defined by the height of aperture wall(s) 116. This cross-section shows sprocket holes 118 parallel to side edges 120. The sample block mechanism 202 is shown in simplified form.

The sequential diagrammatic views of Figs. 4a—d illustrate a cycle of operation of section transfer apparatus 10. Referring to Fig. 4a, elongated sheet 104 is metered out from the supply spool (not shown) by drive sprocket 504a, a distance equivalent to the length of a repeating segment 106 to replenish the repeating segment used in the previous cycle. The supply spool provides a slight reverse drag against the metering by drive sprocket 504a to maintain registration of drive sprocket 504a with the sprocket holes of elongated sheet 104. Concurrently, drive sprocket 504b is metering an equivalent length of elongated sheet 104 onto the elongated sheet take-up spool (not shown) which provides a slight forward or take-up draw on the portion of elongated sheet 104 which is being fed to it by drive sprocket 504b to maintain registration of drive sprocket 504b with the sprocket holes of elongated sheet 104. An equivalent length of release backing 126 is also stripped concurrent with this meeting of elongated sheet 104. During this portion of the operating cycle release brake 512, which is controlled by switch 513, is freely rotating with elongated sheet 104. Pressure roller 304 is not in contact with elongated sheet 104. Sample block B is at the bottom of the cutting plane. Precise positioning of elongated sheet 104 is critical so that a repeating segment 106 is properly aligned to receive a section S of the sample. This positioning is achieved by the metered feed of elongated sheet 104 by drive sprockets 504a and 504b.

Referring now to Fig. 4b, a fresh repeating segment of elongated sheet 104 is registered with sample block B and release brake 512 is activated by switch 513 to momentarily fix elongated sheet 104 in position. Sample block B is positioned such that a portion thereof is above cutting edge 404. Pressure roller 304 is moved into contact with elongated sheet 104 by pressure roller mechanism 302. Concurrently, sample block mechanism 202 (shown in simplified form) begins to move sample block B up into contact with elongated sheet 104. Lamination of the exposed face of sample block B with the adhesive portion of the repeating segment which has been registered into position begins. This contact and upward motion creates a slack in elongated sheet 104 (shown in phantom). As soon as this adhesion is established, release brake 512 is disengaged from elongated sheet 104 by switch 513 and registration is thereafter maintained by the adhesive contact and by tension roller 506. The adhesive portion of elongated sheet 104 is pressed into contact with the remainder of the exposed face of sample block B by pressure roller 304 during upward movement of sample block B.

As shown in Fig. 4c, when the upward movement of sample block B has been completed, pressure roller 304 is withdrawn and release brake 512 is disengaged. An appropriate advance mechanism (not shown) advances sample block B (as indicated by directional arrow) to the desired thickness increment perpendicular to the cutting plane in preparation for cutting of the section S of the sample. Thus, there is no force applied by pressure roller 304 when the cut takes place and the positional distortion caused by mechanical slack of the advance mechanism and thinning of advance mechanism lubrication films by the pressure of roller 304 have been relieved by the motion of the advance mechanism in the opposite direction.

Finally, in Fig. 4d, sample block mechanism 202 begins to move sample block B down (as indicated by the directional arrow) to commence the cutting cycle. The cutting edge 404 of blade 402 has begun cutting a section S from sample block B. Due to its resiliency, platen 122 draws, on a continuous basis, that portion of section S which has been cut into aperture 114 (see Fig. 2a) and away from blade 402, so as to prevent contact with facet 406 of blade 402. Thus, sample section S is physically lifted from the cutting plane and blade facet 406. Further, flexible protective layer 108 rides over blade facet 406 and positively prevents contact of the adhesive surface of platen 122 and facet 406 of blade 402. Also, it is evident that, even if elongated sheet 104 is not lifted from the surface of facet 406, the withdrawal of sample section S into aperture 114 would prevent contact with blade 402. The movement of sample block B, is sufficient to completely sever section S from the sample block B, which adheres to the adhesive portion 124 of platen 122. Elongated sheet 104 forms a slack loop between blade 402 and drive sprocket 504b. The amount of slack permitted is predetermined to lift flexible protective layer 108 off blade 402 which is also illustrated in Fig. 2a and described above. This completes the operational cycle and drive sprockets 504a and 504b are activated to move elongated sheet 104 forward the length of another repeating segment 106 to initiate a subsequent operating cycle.

**Claims**

1. A device for supporting a slice (S) cut from a sample block (B), which device comprises a spacer (108) defining an aperture (114) of a dimension sufficient to admit said slice (S); and a platen (122) having a surface of which at least a portion is adhesive, at least part (124) of said adhesive portion being exposed through said aperture for adherence to said slice, said platen being of a material having an elasticity sufficient to permit resilient extension of an adhesive portion of the surface through said aperture.

2. A device according to claim 1, wherein the spacer is a flexible protective layer which forms a laminate with the platen.

3. A device according to claim 1 or 2, wherein said platen comprises a polymeric film layer having an adhesive surface.

4. A device according to claim 3, wherein said platen comprises a polymeric film layer and adhesive layer of substantially the same dimensions in laminar relationship.

5. A device according to any of claims 1 to 4, which further comprises a release backing (126) covering at least the adhesive exposed by the aperture.

6. A device according to any preceding claim, wherein said spacer has means (118) for positioning said device.

7. An elongate unit comprising a series of devices each as claimed in any preceding claim, the devices being joined one to another in a row.

8. A unit according to claim 7, wherein a plurality of devices are formed in a continuous film roll having uniform perforations along the length thereof each constituting an aperture of a said device and a layer of polymeric film which has a pressure-sensitive adhesive on at least one side providing the said platen of each device.

9. A sectioning apparatus for using a device as claimed in any of claims 1 to 6, or an elongate unit of such devices as claimed in claim 7 or 8, comprising:

(a) a blade (402) for cutting a slice (S) from a sample block (B);

(b) means (202) for positioning said sample block relative to said blade;

(c) means (512, 513, 202) for positioning the adhesive portion of the platen surface of a said device relative to the sample block;

(d) means (302) for relatively moving the adhesive portion of said platen surface of said device and the sample block into mutual contact;

(e) means for relatively moving the sample block and the blade to cut a slice of the sample block which is adhered to the adhesive portion of the platen surface;

(f) the spacer means (108) of the device spacing from the blade that portion of the platen adhering to the sample slice cut from said sample block during relative movement of the sample block and blade.

10. Apparatus according to claim 9, wherein the means for moving an adhesive portion of the platen surface and a portion of the sample block is a pressure roller mechanism (302).

11. Apparatus according to claim 10, wherein the pressure roller mechanism comprises:

(a) a pressure roller (304);

(b) a lever arm (306) having opposed ends, one end being associated with the pressure roller; and

(c) drive means (310), associated with the other end of the lever arm, for moving the pressure roller.

12. Apparatus according to claim 10, wherein the pressure roller mechanism comprises:

(a) a pressure roller;

(b) a racetrack cam, about which the pressure roller moves; and

(c) drive means for moving the pressure roller.

13. Apparatus according to any of claims 9 to 12, wherein the device is as claimed in claim 5, and the apparatus further comprises means (512) for separating said release backing from said platen.

14. Apparatus according to any of claims 9 to 13, which further comprises means for advancing said sample block a predetermined distance with respect to said adhesive surface of said platen.

15. Apparatus according to any of claims 9 to 14, which further comprises means for holding said platen in position relative to the sample block.

16. Apparatus according to any of claims 9 to 15, which further comprises means (504a, 504b) for advancing said platen through said apparatus.

17. A method of sectioning a slice from a surface of a sample block using a blade and a device as claimed in any of claims 1 to 6, or a unit of claim 7 or 8, which method comprises:

(1) adhering a portion of a platen of a said device to said surface of the sample block;

(2) relatively moving the sample block and the blade to cut a slice from the sample block, with the spacer of the device lying between the non-adhered portion of the platen and the blade to lift that portion of the slice which has been cut from the sample block during relative movement of the sample block and blade.

**Patentansprüche**

1. Vorrichtung zur Unterstützung einer von einem Probenblock (B) abgeschnittenen Scheibe (S), welche Vorrichtung ein Abstandsstück (108), das eine Öffnung (114) einer zur Einlassung dieser Scheibe (S) ausreichenden Abmessung definiert, und eine Platte (122) aufweist, die eine Oberfläche hat, von der zumindest ein Bereich haftend ist, wobi zumindest ein Teil (124) dieses haftenden Bereichs zur Haftung an dieser Scheibe durch diese Öffnung freiliegt und wobei diese Platte aus einem Material einer Elastizität besteht, die ausreicht, um eine federnde Ausdehnung eines haftenden Bereichs der Oberfläche durch diese Öffnung zu gestatten.

2. Vorrichtung nach Anspruch 1, in welcher das Abstandsstück eine biegsame Schutzschicht ist, die mit der Platte ein Laminat bildet.

3. Vorrichtung nach Anspruch 1 oder Anspruch 2, in welcher diese Platte eine Polymerfolienschicht mit einer haftenden Oberfläche aufweist.

4. Vorrichtung nach Anspruch 3, in welcher diese Platte eine Polymerfolienschicht und eine mit Haftmittel versehene Schicht von im wesentlichen den gleichen Abmessungen in laminarer Relation aufweist.

5. Vorrichtung nach einem der Ansprüche 1 bis 4, welche ferner einen abziehbaren Belag (126) aufweist, der zumindest das durch die Öffnung freiliegende Haftmittel abdeckt.

6. Vorrichtung nach einem der vorhergehenden Ansprüche, in welcher dieses Abstandsstück eine Einrichtung (118) zur Positionierung dieser Vorrichtung aufweist.

7. Verlängerte Einheit, die eine Folge von Vorrichtungen jeweils nach einem der vorhergehenden Ansprüche aufweist, welche Vorrichtungen in einer Reihe, eine an die andere, aneinandergefügt sind.

8. Einheit nach Anspruch 7, in welcher mehrere Vorrichtungen in einer zusammenhängenden Folienrolle ausgebildet sind, die über ihre Länge gleichbleibende Perforationen, von denen jede eine Öffnung dieser Vorrichtung definiert, und eine Schicht aus Polymerfolie aufweist, die zumindest auf einer Seite ein selbstklebendes Haftmittel aufweist und diese Platte jeder Vorrichtung bildet.

9. Schneidegerät, verwendend eine Vorrichtung nach einem der Ansprüche 1 bis 6, oder eine verlängerte Einheit aus derartigen Vorrichtungen nach Anspruch 7 oder Anspruch 8, welches Schneidegerät aufweist:

(a) eine Klinge (402) zum Abschneiden einer Scheibe (S) von einem Probenblock (B),

(b) eine Einrichtung (202) zur Positionierung dieses Probenblocks in Bezug auf diese Klinge,

(c) Einrichtungen (512, 513, 202) zur Positionierung des haftenden Bereichs der Plattenoberfläche einer solchen Vorrichtung in Bezug auf den Probenblock,

(d) eine Einrichtung (302) zur Relativbewegung des haftenden Bereichs dieser Plattenoberfläche dieser Vorrichtung und des Probenblocks in gegenseitigen Kontakt,

(e) eine Einrichtung zur Relativbewegung des Probenblocks und der Klinge, um eine Scheibe von Probenblock abzuschneiden, die am haftenden Bereich der Plattenoberfläche anhaftet,

(f) das Abstandsmittel (108) der Vorrichtung, welches den an der Probenscheibe, die während der Relativbewegung des Probenblocks und der Klinge vom Probenblock abgeschnitten wird, anhaftenden Bereich der Platte von der Klinge beabstandet.

10. Gerät nach Anspruch 9, in welchem die Einrichtung zur Bewegung eines Haftenden Bereichs der Plattenoberfläche und eines Bereichs des Probenblocks ein Andruckrollenmechanismus (302) ist.

11. Gerät nach Anspruch 10, in welchem der Andruckrollenmechanismus aufweist:

(a) eine Andruckrolle (304),

(b) einen Hebelarm (306) mit gegenüberliegenden Enden, von denen eines mit der Andruckrolle verknüpft ist, und

(c) eine mit dem anderen Ende des Hebelarms verknüpfte Antriebsvorrichtung (310) zur Bewegung der Andruckrolle.

12. Gerät nach Anspruch 10, in welchem der Andruckrollenmechanismus aufweist:

(a) eine Andruckrolle,

(b) eine Nockenlaufbahn, über die sich die Andruckrolle bewegt, und

(c) eine Antriebsvorrichtung zur Bewegung der Andruckrolle.

13. Gerät nach einem der Ansprüche 9 bis 12, in welchem die Vorrichtung der Vorrichtung nach Anspruch 5 entspricht, und das Schneidegerät ferner eine Einrichtung (512) zum Abrennen des abziehbaren Belags von dieser Platte aufweist.

14. Gerät nach einem der Ansprüche 9 bis 13, welches ferner eine Einrichtung aufweist, die diesen Probenblock um eine vorbestimmte Distanz bezüglich dieser haftenden Oberfläche dieser Platte vorschiebt.

15. Gerät nach einem der Ansprüche 9 bis 14, welches ferner eine Einrichtung aufweist, die diese Platte relativ zum Probenblock in ihrer Lage festhält.

16. Gerät nach einem der Ansprüche 9 bis 15, welches ferner Einrichtungen (504a, 504b) zur Vorwärtsbewegung dieser Platte durch dieses Gerät aufweist.

17. Verfahren zum Schneiden einer Scheibe von einem Probenblock unter Benutzung einer Klinge und einer Vorrichtung nach einem der Ansprüche 1 bis 6 oder einer Einheit nach Anspruch 7 oder Anspruch 8, welches Verfahren beinhaltet:

(1) Ankleben eines Bereichs einer Platte dieser Vorrichtung an die Oberfläche des Probenblocks,

(2) Relativbewegung des Probenblocks und der Klinge zum Abschneiden einer Scheibe vom Probenblock, wobei das Abstandsstück der Vorrichtung zwischen dem nicht anhaftenden Bereich der Platte und der Klinge liegt, um den Teilbereich der Scheibe anzuheben, der während der Relativbewegung des Probenblocks und der Klinge vom Probenblock abgeschnitten worden ist.

**Revendications**

1. Dispositif pour supporter une tranche (S) découpée dans un bloc (B) d'échantillon, ce dispositif comportant un élément d'écartement (108) définissant une ouverture (114) possédant une taille suffisante pour recevoir ladite tranche (S), et une platine (122) dont au moins une partie de la surface est adhésive, au moins une partie (124) de ladite partie adhésive étant à nu dans ladite ouverture de manière à adhérer à ladite tranche, ladite platine étant constituée en un matériau possédant une élasticité suffisante pour permettre une extension élastique d'une partie adhésive de la surface à travers ladite ouverture.

2. Dispositif selon la revendication 1, dans lequel l'élément d'écartement est une couche protectrice flexible qui constitue, avec la platine, un stratifié.

3. Dispositif selon la revendication 1 ou 2, dans lequel ladite platine comporte une couche d'un film polymère comportant une surface adhésive.

4. Dispositif selon la revendication 3, dans lequel ladite platine comporte une couche formant film polymère et une couche adhésive possédant essentiellement les mêmes dimensions et qui sont disposées selon une structure stratifiée.

5. Dispositif selon l'une quelconque des revendications 1 à 4, qui comporte en outre un support de détachement (126) recouvrant au moins l'adhésif qui est mis à nu au niveau de l'ouverture.

6. Dispositif selon l'une quelconque des revendications précédentes, dans lequel ledit élément d'écartement comporte des moyens (118) pour positionner ledit dispositif.

7. Unité allongée comportant une série de dispositifs qui sont chacun tel que revendiqué dans l'une quelconque des revendications précédentes, les dispositifs étant réunis les uns aux autres pour former une rangée.

8. Unité selon la revendication 7, dans laquelle une pluralité de dispositifs sont formés dans un rouleau de film continu possédant, sur sa longueur, des perforations uniformes dont chacune constitue une ouverture d'un desdits dispositifs, et une couche d'un film polymère qui possède un adhésif du type autocollant sur au moins une face et constitue ladite platine de chaque dispositif.

9. Appareil de découpage pour l'utilisation d'un dispositif tel que revendiqué dans l'une quelconque des revendications 1 à 6, ou une unité allongée formée de tels dispositifs et telle que revendiquée dans la revendication 7 ou 8, comprenant:

(a) une lame (402) pour découper une tranche (S) dans un bloc (B) d'échantillon;

(b) des moyens (202) pour positionner ledit bloc contenant l'échantillon par rapport à ladite lame;

(c) des moyens (512, 513, 202) pour positionner la partie adhésive de la surface de la platine de l'une desdits dispositifs par rapport au bloc contenant l'échantillon;

(d) des moyens (302) pour déplacer de façon relative la partie adhésive de ladite surface de la platine dudit dispositif et le bloc contenant l'échantillon, en les plaçant en contact mutuel;

(e) des moyens pour déplacer l'une par rapport à l'autre le bloc contenant l'échantillon et la lame afin de couper une tranche du bloc d'échantillon qui adhère à la partie adhésive de la surface de la platine;

(f) les moyens formant l'élément d'écartement (108) dudit dispositif écartant de la lame la partie de la platine qui adhère à la tranche de l'échantillon, découpée dans ledit bloc d'échantillon pendant le déplacement relatif du bloc d'échantillon et de la lame.

10. Appareil selon la revendication 9, dans lequel les moyens pour déplacer une partie adhésive de la surface de la platine et une partie du bloc d'échantillon sont un mécanisme (302) à galet de pression.

11. Appareil selon la revendication 10, dans lequel le mécanisme à galet de pression comprend:

(a) un galet de pression (304);

(b) un bras de levier (306) comportant des extrémités opposées, dont l'une est associée au galet de pression; et

(c) des moyens d'entraînement (310) associés à l'autre extrémité du bras de levier pour déplacer le galet de pression.

12. Appareil selon la revendication 10, dans lequel la mécanisme à galet de pression comprend:

(a) un galet de pression;

(b) une came à piste, le long de laquelle le galet de pression se déplace; et

(c) des moyens d'entraînement pour déplacer le galet de pression.

13. Appareil selon l'une quelconque des revendications 9 à 12, dans lequel le dispositif est tel que revendiqué dans la revendication 5, et l'appareil comporte en outre des moyens (512) pour séparer ledit support de détachement, de ladite platine.

14. Appareil selon l'une quelconque des revendications 9 à 13, qui comporte en outre des moyens pour faire avancer ledit bloc d'échantillon sur une distance prédéterminée par rapport à ladite surface adhésive de ladite platine.

15. Appareil selon l'une quelconque des revendications 9 à 14, qui comporte en outre des moyens pour maintenir ladite platine en position par rapport audit bloc d'échantillon.

16. Appareil selon l'une quelconque des revendications 9 à 15, qui comporte en outre des moyens (504a, 504b) pour faire avancer ladite platine à travers ledit appareil.

17. Procédé pour découper une tranche à partir d'une surface d'un bloc d'échantillon en utilisant une lame et une dispositif tels que revendiqués dans l'une quelconque des revendications 1 à 6, ou une unité selon la revendication 7 ou 8, lequel procédé consiste à:

(1) Faire adhérer une partie d'une platine dudit dispositif à ladite surface d'échantillon;

(2) déplacer l'une par rapport à l'autre le bloc contenant l'échantillon et la lame de manière à découper une tranche dans le bloc contenant l'échantillon, l'élément d'écartement du dispositif étant située entre la partie non adhésive de la platine et la lame de manière à soulever la partie de la tranche qui a été découpée dans le bloc d'échantillon pendant le déplacement relatif du bloc d'échantillon et de la lame.

FIG.1

0 088 549

*FIG. 2*

*FIG. 3*

2

0 088 549

FIG. 2a

3

FIG.4a

FIG.4b

FIG.4c

FIG.4d